# EUROPÄISCHE PATENTANMELDUNG

(11) **EP 2 667 440 A1**
(43) Veröffentlichungstag der Anmeldung: **27.11.2013**
(21) Anmeldenummer: 12169127.3
(22) Anmeldetag: 23.05.2012
(51) Int. Cl.: H01M 8/04, H01M 8/06

(54) **Brennstoffzellensystem und Verfahren zum Betrieb eines solchen**

(71) Anmelder: WS Reformer GmbH, 71272 Renningen (DE)
(72) Erfinder: Schmid, Hans-Peter, 73666 Hohengehren (DE); Wünning, Joachim A., 71229 Leonberg (DE)
(74) Vertreter: Rüger, Barthelt & Abel

(57) **Zusammenfassung**

Das erfindungsgemäße Brennstoffzellensystem nutzt einen Stack (11) mit Wasserstoff-betriebenen Brennstoffzellen, die zur Stromerzeugung eine erhöhte Betriebstemperatur von mehr als 100°C benötigen. In Betrieb erzeugen sie aber Verlustwärme, die eine Kühlung erfordert. Der Stack (11) wird beim Starten des Betriebs mit Dampf aufgeheizt, der vorzugsweise unter Kondensation durch seine Temperierungskanäle geleitet wird. Überschüssiger Dampf kann einem Reformierungsprozess zur Wasserstofferzeugung zugeführt werden. Der zur Aufheizung erforderliche Dampferzeuger kann Teil einer Reformierungseinrichtung sein und die Wärme eines Brenners nutzen, der zur Beheizung der Reformierungseinrichtung ohnehin vorhanden ist. Nach dem Aufheizen kann der zum Dampfreforming erforderliche Dampf in den Temperierungskanälen des Stacks (11) mittels der Stack-Verlustwärme erzeugt werden.

## Beschreibung

Gegenstand der Erfindung ist ein Brennstoffzellensystem mit einem Brennstoffzellen-Stack, dessen Arbeitstemperatur über der Umgebungstemperatur liegt, sowie auf ein Verfahren zum Betrieb eines solchen Brennstoffzellensystems.

Brennstoffzellensysteme erzeugen mittels Redoxreaktion elektrischen Strom und Wärme aus flüssigen oder gasförmigen Brennstoffen. Sie zeichnen sich durch hohe Energieeffizienz sowie durch lautlosen Betrieb aus.

Die Funktionssicherheit und die Herstellungskosten eines Brennstoffzellensystems hängen wesentlich von dessen Temperatur- und Wärmemanagement ab. Je nach Typ der Brennstoffzelle arbeiten Brennstoffzellensysteme bei erhöhten Temperaturen, zum Teil deutlich über 100°C. Als besonders vorteilhaft, weil unempfindlich gegen Kohlenstoffmonoxid Verunreinigungen, haben sich HT-PEM-Brennstoffzellen herausgestellt. Jedoch sind zum Start, zum Anfahren und zum Betrieb solcher Brennstoffzellensysteme auf Grund der nötigen Betriebstemperaturen aufwendige Wärmemanagementsysteme erforderlich. Für verschiedene, unter Umständen vorhandene Teilsysteme eines Brennstoffzellen-Systems, wie z.B. für einen Shift-Reaktor oder einen Reformierungsreaktor, können die Betriebstemperaturen durchaus unterschiedlich sein und zum Teil deutlich über der Betriebstemperatur des Brennstoffzellen-Stacks liegen.

Die EP 2 061 113 A1 offenbart ein Brennstoffzellensystem mit einem Stack, der in einem äußeren Bereich Kanäle zur Luftkühlung aufweist. Zum Anfahren des Brennstoffzellensystems werden Produktgase eines Reformers oder einer thermischen Startvorrichtung durch die Luftkanäle des Bereichs der Brennstoffzelle geleitet. Dieses Verfahren nutzt Produktgase oder Abgase zur Beheizung der äußeren Bereiche, die sonst der Luftkühlung dienen.

Aus der EP 1 726 056 B1 ist ein Brennstoffzellensystem bekannt, in dem zum ersten Anfahren vorgeheizte Luft genutzt wird, die durch eine Reformerstufe, durch eine Shift-Stufe und anodenseitig durch den Stack geleitet wird.

Die WO 2009/143929 stellt ein Brennstoffzellensystem mit einer elektrischen Heizeinrichtung dar, die in thermischem Kontakt mit einem Brennstoffzellenstapel steht und von einem elektrischen Energiespeicher gespeist wird.

Schließlich offenbart die DE 10 2006 047 493 B4 ein Brennstoffzellensystem mit einer Heizung, die neben dem Stack angeordnet ist und diesen insbesondere beim Anfahren mit Wärme versorgt.

Aufgabe der Erfindung ist es, ein Konzept anzugeben, mit dem das Wärmemanagement eines Brennstoffzellensystems, insbesondere für den intermittierenden Betrieb eines solchen Systems, verbessert ist.

Diese Aufgabe wird erfindungsgemäß mit einem Brennstoffzellensystem mit den Merkmalen nach Anspruch 1 und einem Verfahren nach Anspruch 9 gelöst.

Der Stack besteht aus einer oder mehreren miteinander elektrisch verbundenen Brennstoffzellen, wobei der Stack einen Anodenkanal und einen Kathodenkanal aufweist, durch die für den Betrieb erforderliche gasförmige oder flüssige Stoffe den einen oder mehreren Kathoden und Anoden zugeführt werden können. Ferner weist das Brennstoffzellensystem wenigstens einen Temperierungskanal auf, der mit dem Stack und dessen Bauelementen thermisch verbunden ist. Durch den Temperierungskanal kann dem Stack Wärme zu- und abgeführt werden, und zwar z.B. durch Wärmeleitung, Konvektion oder Fluss von wärmetragendem Fluid.

Das Brennstoffzellensystem weist ferner eine Dampferzeugungsvorrichtung mit einem Versorgungskanal auf, über den die Dampferzeugungsvorrichtung mit dem Temperierungskanal speisend verbunden ist. Die zur Dampferzeugung erforderliche Wärme wird z.B. durch einen Brenner, vorzugsweise einen Rekuperatorbrenner, bereitgestellt, der zur Verbrennung von festen, flüssigen oder gasförmigen Brennstoffen, insbesondere des für den Reformingprozess ohnehin bereitgestellten Brennstoffs und/oder Anodenrestgasen eingerichtet ist.

Der Versorgungskanal kann eine Leitungsverbindung, bestehend aus gesonderten Leitungen, Schläuchen oder dergleichen sein. Der Versorgungskanal dient der Speisung des Temperierungskanals mit Dampf. Es können mehrere Temperierungskanäle (z.B. der des Shiftreaktors und der des Stacks) mit mehreren Versorgungskanälen in Serie (Kette) oder auch anderweitig verbunden sein.

Jeder Temperierungskanal kann gerade, mäandernd gewunden, gewendelt, spiralförmig, schraubenförmig oder anderweitig geformt sein. Er kann einen runden oder unrunden (z.B. polygonalen, elliptischen, spaltförmigen o.ä.) Querschnitt aufweisen. Er kann durchgehend unverzweigt oder ein- oder mehrfach verzweigt ausgebildet sein. Er kann eine einheitlicher Querschnittsform oder wechselnde Querschnittsformen aufweisen. Er kann einen einheitlichen Querschnittsflächeninhalt oder wechselnde Querschnittsflächeninhalte aufweisen. Der Temperierungskanal wird beim Aufheizen des Stacks mit Dampf gespeist, der in dem Temperierungskanal kondensieren kann. Bei normalem Lastbetrieb wird der Temperierungskanal vorzugsweise mit Wasser gespeist und dient dann als Kühlkanal, zur Aufheizung oder wenigstens teilweisen Verdampfung des Wassers.

Unter der Betriebsphase oder normalen Lastbetriebsphase werden insbesondere solche Phasen verstanden, in denen der Stack eine für einen Verbraucher ausreichende Menge Strom produzieren kann. In einer Anfahrphase oder in Phasen des intermittierenden Betriebs wird der Stack durch Aufheizung auf eine höhere Stromproduktion im Betrieb vorbereitet.

Vorteilhaft an der Verwendung von Wasserdampf ist auch, dass dieser eine hohe Verdampfungs- bzw. Kondensationsenthalpie besitzt. Es müssen nur geringe Stoffmengen umgepumpt werden.

Durch die Verwendung von Dampf kann im intermittierenden Betrieb des Brennstoffzellensystems jeweils ein schnelles Anfahren erreicht werden. Der Temperierungskanale ist gegen den Anodenkanal und den Kathodenkanal dicht, so dass der Kathodenkanal und der Anodenkanal sicher wasserfrei gehalten werden und eine Membranschädigung durch Feuchtigkeit unterbleibt.

In einem Brennstoffzellensystem mit einem Reformierungsreaktor und einem Shiftreaktor kann auch der Shiftreaktor mit einem Temperierungskanal verbunden sein um beim Anfahren beheizt zu werden.

Vorzugsweise weist das Brennstoffzellensystem lediglich eine einzige Dampferzeugungsvorrichtung mit einem oder mehreren Brennern auf, die Dampf sowohl zur Aufheizung des Stacks und gegebenenfalls des Shiftreaktors als auch zur späteren Speisung des Reformierungsreaktors liefert. Der Brenner kann vorzugsweise auch zum Beheizen des Reformers dienen. Eine sonstige Stackheizung ist nicht vorhanden. Das Gesamtsystem wird so apparativ vereinfacht. Die erfindungsgemäße Aufheizung des Stacks mittels Brenner und Dampf als Wärmeträgerfluid stellt die Betriebsbereitschaft des Stacks schnell und effizient her.

Es ist vorteilhaft, wenn der Brenner der Dampferzeugungsvorrichtung eine Wärme-Rekuperationseinrichtung aufweist. Diese nutzt z.B. den Abgaswärmestrom und/oder die Wärme eines anderen Fluidstroms zur Aufheizung von Luft und oder Brennstoff.

Eine einfache Regelbarkeit der Stacktemperatur kann durch eine an den Temperierungskanal angeschlossene Druckhaltevorrichtung erzielt werden. Die Druckhaltevorrichtung kann durch ein Einstellventil, ein mechanisches Druckregelventil (Dampf-Vordruckregler) oder ein Ventil mit einem elektronischen Regler gebildet werden.

Bevorzugt ist dem Temperierungskanal ein Einstellventil nachgeschaltet, über das überschüssiger Dampf abgeführt werden kann. Das Einstellventil kann ein einstellbares Drosselventil oder ein Regelventil sein. Es kann elektrisch betätigt und/oder mit einer elektronischen Regelung verbunden sein. Der Dampf-Stoffstrom kann so an den Bedarf des Reformers angepasst und außerdem überschüssige Wärmeenergie ausgekoppelt werden. Alternativ kann der Dampfstrom vor dem Stack in einen ersten Teilstrom, der in dem Stack ganz oder teilweise kondensiert, und einen zweiten Teilstrom verzweigt werden, der dem Reformer zugeführt wird.

Das Brennstoffzellensystem enthält bevorzugt ein Ventil in dem Wasserzufuhrweg, so dass die Wasserzufuhr und somit die Dampferzeugung je nach Bedarf, vorzugsweise elektrisch, zu- oder abgeschaltet, gedrosselt, gesteuert oder geregelt werden kann.

Das erfindungsgemäße Verfahren betrifft das Anfahren eines Brennstoffzellensystems mit einem aufzuheizenden Stack, dessen Temperierungskanal beim Anfahren mit Dampf, beaufschlagt wird. Der Dampf kann Nassdampf, Sattdampf oder Heißdampf sein. Unter dem "Anfahren" kann jede Betriebszustandsänderung verstanden werden, bei welcher der Stack eine Temperaturerhöhung erfordert, die er nicht, oder nicht mit der gewünschten Geschwindigkeit, aus dem eigenen Verlustwärmeaufkommen decken kann.

Das Brennstoffzellensystem kann mittels Dampfbeheizung der Temperierungskanäle:
- aus dem kalten Zustand in einen Bereitschaftsmodus,
- aus dem kalten Zustand in einen Betriebsmodus,
- aus einem Bereitschaftsmodus in einen Betriebsmodus überführt werden.

Bei weiteren Ausführungsformen können zwei oder mehrere der Maßnahmen miteinander kombiniert werden.

Die Nutzung von Wasserdampf und seiner Kondensationswärme ermöglicht ein schnelles Aufheizen des Stacks. Die in Betrieb kühlungshalber zur Dampferzeugung dienenden Temperierungskanäle sind für die Führung und Verdampfung von Wasser ebenso ausgelegt wie zur Kondensation von Dampf zu Aufheizzwecken.

Bevorzugt wird beim Anfahren auch dem Temperierungskanal des Shiftreaktors ebenfalls Dampf zugeführt, um auch diesen auf Betriebstemperatur zu bringen.

Vorzugsweise wird beim Beheizen des Stacks mit Dampf etwa so viel Dampf nicht kondensiert, wie zur Speisung des Reformers beim Anfahren nötig ist. Damit wird schon im Anfahrprozess die zur Dampfreformierung erforderliche Dampfmenge über den Temperierungskanal geliefert.

Bevorzugt wird die Stacktemperatur durch die Druckhaltevorrichtung geregelt. Die Temperatur des Stacks ergibt sich aus dem fest eingestellten Druck des Nassdampfs. Dies ergibt einen einfachen reglungstechnischen Aufbau des Gesamtsystems.

In einer bevorzugten Ausführungsform erhitzt der Brenner zunächst den Reformer auf eine Temperatur T1 und erzeugt dabei auch Dampf. Der Dampf wird dann über einen Versorgungskanal dem Temperierungskanal des Shiftreaktors zugeführt und erhitzt diesen auf die Temperatur T2. Anschließend wird der Dampf über einen weiteren Versorgungskanal dem Temperierungskanal des Stacks zugeführt, der auf die Temperatur T3 erhitzt wird. Durch Abstimmung der Eigenschaften des Brenners, der Dampferzeugungsvorrichtung, der Versorgungs- und Temperierungskanäle und der Druckhaltevorrichtung, wie zum Beispiel deren Leistung, Dimensionierung, Wärmeverluste, usw. werden die für den Betrieb gewünschten Temperaturen T1, T2 und T3 erreicht und eingestellt.

Bevorzugt wird nach dem Stack anfallendes Kondensat mittels eines Kondensatabscheiders von dem Dampf abgetrennt. Das Kondensat kann dann zur Wärmegewinnung und/oder Dampferzeugung wieder verwendet werden.

Zur Wärmegewinnung kann etwaiger Dampfüberschuss vor dem Reformierungsreaktor über ein Einstellventil abgeleitet werden. Die Wärmegewinnung kann durch einen wärmetauschenden Kondensator erfolgen.

Bevorzugt wird von dem Temperierungskanal des Stacks kommender Dampf zusammen mit einem Brennstoffstrom einem Reformierungsreaktor zugeführt. Zumindest ein Teil des Dampfs wird dadurch stofflich und thermisch genutzt. Mittels einer Strahlpumpe können der Dampf und der Brennstoff wirksam gemischt werden.

Bevorzugt werden die Massenströme von Wasser und/oder Wasserdampf, Brennstoff und Luft mit einer Steuereinrichtung nach einem Programm entsprechend dem Modus des Brennstoffzellensystems eingestellt. Die drei Betriebsarten des Brennstoffzellensystems sind:
- Aufheizmodus (Reformer, Shiftreaktor und Stack werden durch kontrollierte Wärmezufuhr auf Betriebstemperatur gebracht),
- Bereitschaftsmodus (System wird auf Betriebstemperatur gehalten, um im Bedarfsfall schnell mit der Stromerzeugung starten zu können),
- Betriebsmodus (dem Stack muss bei der Stromerzeugung entstehende Verlustwärme entzogen werden).

Bei den ersten beiden Modi kann der Stack dampfbeheizt werden. Im dritten Modus dient er als Verdampfer und ist so verdampfungsgekühlt.

Vorteilhafte Weiterbildungen werden durch die Kombination wenigstens eines der unabhängigen Ansprüche mit den Merkmalen eines oder mehrerer Unteransprüche erhalten.

In der einzigen Figur der Zeichnung ist ein Ausführungsbeispiel der Erfindung veranschaulicht. Die Zeichnung ergänzt die Beschreibung. Es zeigt:

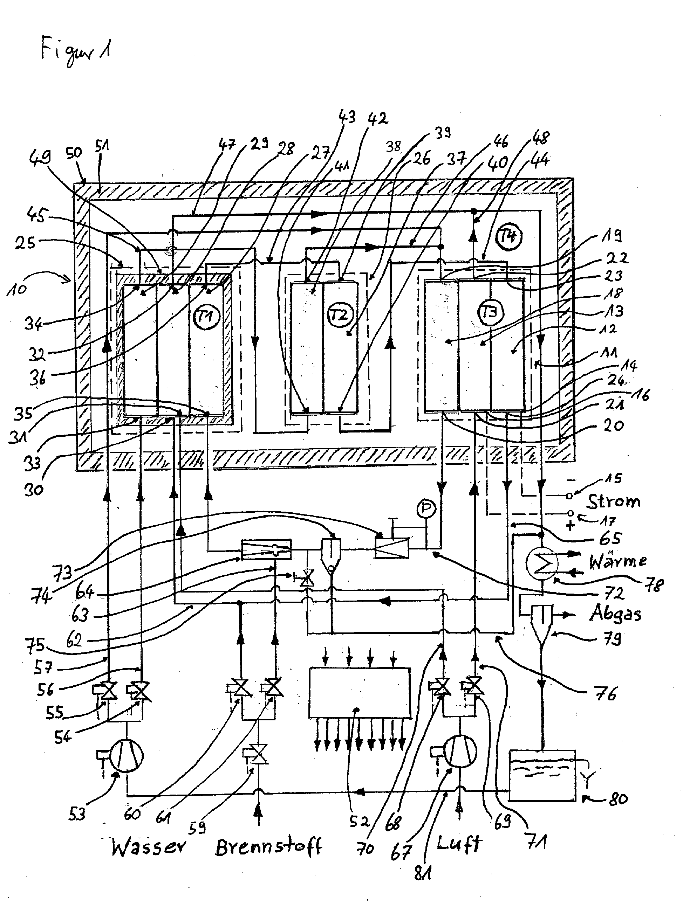

Figur 1 ein Ausführungsbeispiel des erfindungsgemäßen Systems, in schematischer Darstellung.

In Figur 1 ist ein Brennstoffzellensystem 10 als beispielhafte Ausführung der Erfindung veranschaulicht. Das Brennstoffzellensystem 10 weist einen Stack 11 auf, der mindestens eine, vorzugsweise mehrere Brennstoffzellen zur Umsetzung von Wasserstoff und Sauerstoff zu Wasser unter Erzeugung elektrischer Leistung aufweist. Jede der Brennstoffzellen weist eine Protonenaustauschmembrane auf, die einen Anodenkanal 12 von einem Kathodenkanal 13 trennt. Die Anodenkanäle 12 der einzelnen Brennstoffzellen können wie auch die Kathodenkanäle 13 jeweils einzeln oder gruppenweise parallel oder in Reihe angeordnet sein.

Die Brennstoffzellen des Stacks 11 weisen jeweils eine Anode 14 auf, die zu einem elektrischen Anschluss 15, sowie eine Kathode, die zu einem Anschluss 17 führt. Die Brennstoffzellen des Stacks 11 können paarweise oder gruppenweise elektrisch parallel oder in Reihe geschaltet sein.

Der Stack 11 ist mit mindestens einem Temperierungskanal 18 versehen, der in engem thermischen Kontakt mit Wärmequellen des Stacks 11 steht. Wärmequellen können die Protonenaustauschmembranen, mit ihr verbunden elektrische Kontakte, Stromleitungen oder sonstige Elemente des Stacks 11 sein. Der Temperierungskanal 18 ist ein Fluidkanal, der sich durch Elemente des Stacks 11 hindurch erstreckt oder außen an diesen entlang führt. Die Elemente können zwischen einzelnen Brennstoffzellen angeordnet und z.B. plattenförmig ausgebildet sein. Der Temperierungskanal kann durchgehend unverzweigt, unterbrochen unverzweigt, ein- oder mehrfach verzweigt oder mit Unterbrechungen ausgebildet sein.

Der Temperierungskanal 18, der Anodenkanal 12 und der Kathodenkanal 13 haben Anschlüsse zur Medienzu- und -abfuhr. Dem Temperierungskanal 18 kann über seinen Eingang 19 Wasser oder Dampf zugeführt und über seinen Ausgang 20 abgeführt werden. Dem Kathodenkanal 13 wird Luft über den Eingang 21 zugeführt. Entstehendes Wasser wird über seinen Ausgang 22 abgeführt. Dem Anodenkanal 12 wird Wasserstoff über seinen Eingang 23 zugeführt und Anodenrestgas wird über seinen Ausgang 24 abgeführt.

Der Wasserstoff zum Betrieb des Stacks 11 wird von einem Reformer 25 vorzugsweise in Verbindung mit einer Shifteinheit 26 bereitgestellt.

Der Reformer 25 weist einen Reformierungsreaktor 27 auf, in dem aus einem Brennstoff, vorzugsweise Kohlenwasserstoff, und Wasserdampf Wasserstoff erzeugt wird. Dabei entsteht auch Kohlendioxid und gegebenenfalls auch Kohlenmonoxid. Weiter weist der Reformer 25 einen Brenner 28 zur Beheizung des Reformierungsreaktors 27 und einer Dampferzeugungsvorrichtung 29 auf. Die Dampferzeugungsvorrichtung kann z.B. einen oder mehrere einfache oder verzweigte Verdampfungskanäle aufweisen, denen unter Druck Wasser zugeführt wird. Der Brenner weist einen Brennstoffeingang 30 und einen Lufteingang 31 auf. Über einen Brennerausgang 32 wird Abgas abgegeben.

Der Dampferzeugungsvorrichtung 29 wird über einen Eingang 33 Wasser zugeführt. An ihrem Ausgang 34 gibt sie je nach Ausführung oder Betriebsführung nassen oder trockenen Dampf ab.

Der Reformierungsreaktor 27 wird an seinem Eingang 35 mit einem Gemisch aus Brennstoff und Wasserdampf gespeist. An seinem Ausgang 36 wird Roh-Reformat ausgeleitet. Das Roh-Reformat enthält u.a. Wasserstoff, Kohlenmonoxid, ggfs. Kohlendioxid und Wasserdampf.

Die Shifteinheit 26 enthält einen Shiftreaktor 37 und einen Temperierungskanal 38. Der Shiftreaktor 37 dient dazu, den Kohlenmonoxidgehalt des Roh-Reformats auf eine für den Stack 11 unschädliche Konzentration herabzusetzen. Zur Unterstützung der Shiftreaktion enthält der Shiftreaktor 37 einen oder mehrere Katalysatoren. Dem Shiftreaktor 37 wird Roh-Reformat über einen Shiftreaktor-Eingang 39 zugeführt und über einen Shiftreaktor-Ausgang 40 wird von Kohlenmonoxid ausreichend befreites Reformat herausgeführt.

Der Temperierungskanal 38 des Shiftreaktors 37 ist ein Fluidkanal, der in engem thermischem Kontakt mit dem Shift-reaktor angeordnet ist. Der Temperierungskanal 38 des Shiftreaktors kann verzweigt oder unverzweigt ausgebildet sein. Der Temperierungskanal 38 des Shiftreaktors 37 weist einen Eingang 41 zur Dampfzufuhr und einen Ausgang 42 zur Dampfabgabe auf.

Der Ausgang 36 ist über eine Reformat-Leitung 43 mit dem Shiftreaktor-Eingang 39 verbunden, um den Shiftreaktor 37 mit Roh-Reformat zu speisen. Der Shiftreaktor-Ausgang 40 ist über die Synthesegas-Leitung 44 an den Eingang 23 angeschlossen und speist den Anodenkanal 12 mit Reformat. Der Ausgang 34 ist mit dem Eingang 41 speisend verbunden. An den Ausgang 42 des Temperierungskanals 38 ist ein zweiter Versorgungskanal 46 angeschlossen, der seinerseits den Eingang 19 des Stacks 11 speist.

Die Abgase des Brenners 28 werden über eine Abgasleitung 47 abgeleitet. Z.B. ist die Abgasleitung 47 mit einer zweiten Abgasleitung 48 zusammengeführt, die an den Ausgang 22 angeschlossen ist und Abgas aus den Brennstoffzellen ableitet.

Die Einheit aus Reformierungsreaktor 27, Brenner 28 und Dampferzeugungsvorrichtung 29 befindet ist in einer Wärmeisolierung 49 angeordnet. Der Reformer 25, die Shifteinheit 26 und der Stack 11 befinden sich in einem Gehäuse 50 mit Wärmisolierung 51. Die Wärmeisolierung 49 und die Wärmeisolierung des Gehäuses 51 können aus gleichen oder unterschiedlichen Materialien bestehen.

Dem Brennstoffzellensystem 10 werden unter Kontrolle einer Steuereinrichtung 52 Prozessmedien für das Anfahren, für den Betrieb und für den Bereitschaftsmodus zugeführt. Eine Wasserpumpe 53 ist über eine Leitung mit einem ersten Wasserventil 54 und über eine weitere Leitung mit einem zweiten Wasserventil 55 verbunden. Alternativ kann auch eine Leitung mit einem Wege-Ventil verwendet werden. Die Wasserventile 54, 55 sind elektrisch betätigbar. Das erste Wasserventil 54 steuert die Wasserzufuhr zur Dampferzeugungsvorrichtung 29. Es ist dazu über eine erste Wasserleitung 56 mit dem Eingang der Dampferzeugungsvorrichtung 33 verbunden. Mit dem zweiten Wasserventil 55 wird die Wasserzufuhr zum Temperierungskanal 18 des Stacks 11 gesteuert oder geregelt. Es ist dazu mit dem zweiten Versorgungskanal 46 fluidisch verbunden.

Die Brennstoffzufuhr wird über ein Brennstoffhauptventil 59 elektrisch gesteuert. Es ist über eine erste Leitung mit einem Brennerventil 60 und über eine zweite Leitung mit einem Reformerventil 61 verbunden. Das Brennerventil 60 ist über eine erste Brennstoffleitung 62 mit dem Brennstoffeingang 30 verbunden und zur Einstellung der Brennstoffzufuhr elektrisch betätigbar. Das Reformerventil 61 ist über eine zweite Brennstoffleitung 63 mit dem Sauganschluss einer Dampfstrahlpumpe 64 verbunden und zur Einstellung der Brennstoffzufuhr zu dem Reformer elektrisch betätigbar.

Eine Anodenrestgasleitung 65 ist an den Ausgang 24 angeschlossen und mit der ersten Brennstoffleitung verbunden.

Die Luftzufuhr wird über ein Luftgebläse 67 bewirkt, das über eine erste Leitung mit einem Brenner-Luftventil 68 und über eine zweite Leitung mit einem Kathoden-Luftventil 69 verbunden ist. Das Brenner-Luftventil 68 ist über eine erste Luftleitung 70 mit dem Lufteingang 31 verbunden und das Kathoden-Luftventil 69 ist über eine zweite Luftleitung 71 mit dem Eingang 21 verbunden. Die Luftventile sind elektrisch betätigbar.

Über eine Dampfleitung 72 ist der Ausgang 20 an einen Dampf-Vordruckregler 73 angeschlossen, der seinerseits an einen Kondensatabscheider 74 speist. Der Kondensatabscheider 74 ist zwischen der Dampfstrahlpumpe 64 und zu einem Einstellventil 75 angeordnet und gibt Kondensat an eine Überschussleitung 76 ab.

Das Einstellventil 75 kann ein mechanisches Ventil oder ein elektrisch betätigbares Ventil sein. Die Überschussleitung 76 speist zusammen mit der Abgasleitung 47 einen Wärmetauscher 78. Das durch den Wärmetauscher geleitete Abgas durchströmt einen zweiten Kondensatabscheider 79. Das Kondensat fließt in einen Kondensatbehälter 80 ab, der als Wasserreservoir dient. Die Wasserpumpe 53 ist über eine Kondensatleitung 81 eingangsseitig mit dem Kondensatbehälter verbunden.

Das insoweit beschriebene Brennstoffzellensystem arbeitet wie folgt:

Im Aufheizmodus wird von der Steuereinrichtung 52 das Luftgebläse 67 und das Brenner-Luftventil 68 aktiviert, danach eine nicht gezeichnete Zündvorrichtung und die Brennstoffzufuhr über das Brennstoffhauptventil 59 sowie das Brennerventil 60 und schließlich die Wasserpumpe 53 und das erste Wasserventil 54 im Wasserzufuhrweg. Damit wird der Brenner 28 gezündet, der Reformierungsreaktor 27 aufgeheizt und gleichzeitig Dampf erzeugt.

Sobald der Reformierungsreaktor 27 die Betriebstemperatur T1 von etwa 800°C erreicht hat, wird die Brennstoffzufuhr gedrosselt. Der Dampf wird in den Temperierungskanal 38 geleitet und heizt zunächst die Shifteinheit 26 mit dem Shiftreaktor 37 auf die Starttemperatur T2 auf. Der Dampf gelangt danach in den Temperierungskanal 18 und heizt den Stack 11 auf die Starttemperatur T3 auf. In dem Temperierungskanal 38, mindestens aber in dem Temperierungskanal 18 wird der Dampf vorzugsweise zumindest teilweise kondensiert. Das Wasser/Dampf-Gemisch wird über die Druckhaltevorrichtung in Gestalt eines Dampf-Vordruckreglers 73 und über den Kondensatabscheider 74 zu einem Wärmetauscher 78 geleitet.

Im Betriebsmodus (Stromerzeugung) werden zusätzlich das Kathoden-Luftventil 69 und das Reformerventil 61 geöffnet, das erste Wasserventil 54 im Wasserzufuhrweg geschlossen und das zweite Wasserventil 55 im Wasserzufuhrweg geöffnet. In den Temperierungskanälen 18 des Stacks 11 wird Nassdampf erzeugt. Über die Dampfstrahlpumpe 64 wird mit dem Wasserdampf Brennstoff angesaugt und im Reformierungsreaktor 27 zu Wasserstoff und Kohlenstoffmonoxid aufgespalten. In dem Shiftreaktor 37 erfolgt die Konvertierung des Kohlenstoffmonoxids in Wasserstoff bis auf einen Rest < 1%.

Das Gasgemisch wird dem Anodenkanal 12 des Stacks 11 zugeführt, wo mit dem Luftsauerstoff, der dem Kathodenkanal 13 zugeführt wird, Strom erzeugt wird. Die Verlustwärme wird über den Temperierungskanal 18 durch Verdampfen von Wasser abgeführt. Der Dampf-Vordruckregler 73 regelt die Temperatur T3 des Stacks 11. Vom Dampf wird das Wasser im Kondensatabscheider 74 getrennt. Da mit der Verlustwärme des Stacks 11 mehr Dampf erzeugt wird, als für die Reformierung notwendig ist, kann ein Teil des Dampfes über das Einstellventil 75 vor der Dampfstrahlpumpe 64 abgeleitet werden. Von der Steuereinrichtung 52 werden die Massenströme von Wasser, Wasserdampf, Brennstoff und Luft nach einem Programm automatisch eingestellt. Das Anodenrestgas, das noch brennbare Bestandteile enthält, wird über die Anodenrestgasleitung 65 zu dem Brenner 28 geleitet. Das Abgas von dem Brenner 28 und die Abluft der Kathode 16 bzw. des Kathodenkanals 13 werden in einem Wärmetauscher 78 bis unter den Taupunkt abgekühlt und das Wasser in einem zweiten Kondensatabscheider 79 abgetrennt und im Kondensatbehälter 80 aufgefangen.

Im Bereitschaftsmodus wird die Wasserpumpe 53 abgestellt und der Reformer 25 durch entsprechende Brennstoffzufuhr über das Brennerventil 60 und Luftzufuhr über das Ventil 68 im Bereich der Betriebstemperatur gehalten. Durch die Abstimmung der Wärmeisolierung 49 des Reformers 25 und der Wärmeisolierung 51 des Gehäuses werden der Shiftreaktor 26 und der Stack 11 auf der Starttemperatur T4 gehalten, so dass unmittelbar mit der Stromerzeugung begonnen werden kann. Für diesen Bereitschaftsmodus entsteht keinerlei zusätzlicher apparativer oder reglungstechnischer Aufwand.

Das erfindungsgemäße Brennstoffzellensystem 10 nutzt einen Stack 11 mit Wasserstoff-betriebenen Brennstoffzellen, die zur Stromerzeugung eine erhöhte Betriebstemperatur von mehr als 100°C benötigen. In Betrieb erzeugen sie aber Verlustwärme, die eine Kühlung erfordert. Der Stack 11 wird beim Starten des Betriebs mit Dampf aufgeheizt, der vorzugsweise unter Kondensation durch seine Temperierungskanäle geleitet wird. Überschüssiger Dampf kann einem Reformierungsprozess zur Wasserstofferzeugung zugeführt werden. Der zur Aufheizung erforderliche Dampferzeuger kann Teil einer Reformierungseinrichtung sein und die Wärme eines Brenners nutzen, der zur Beheizung der Reformierungseinrichtung ohnehin vorhanden ist. Nach dem Aufheizen kann der zum Dampfreforming erforderliche Dampf in den Temperierungskanälen des Stacks 11 mittels der Stack-Verlustwärme erzeugt werden.

### Bezugszeichenliste:

- 10: Brennstoffzellensystem
- 11: Stack
- 12: Anodenkanal
- 13: Kathodenkanal
- 14: Anode
- 15: negativer Anschluss
- 16: Kathode
- 17: positiver Anschluss
- 18: Temperierungskanal
- 19: Eingang
- 20: Ausgang
- 21: Eingang
- 22: Kathodenkanalausgang
- 23: Anodenkanaleingang
- 24: Anodenkanalausgang
- 25: Reformer
- 26: Shifteinheit
- 27: Reformierungsreaktor
- 28: Brenner
- 29: Dampferzeugungsvorrichtung
- 30: Brennstoffeingang
- 31: Lufteingang
- 32: Brennerausgang
- 33: Eingang der Dampferzeugungsvorrichtung
- 34: Ausgang der Dampferzeugungsvorrichtung
- 35: Reformierungsreaktor-Eingang
- 36: Reformierungsreaktor-Ausgang
- 37: Shiftreaktor
- 38: Temperierungskanal des Shiftreaktors
- 39: Eingang des Shiftreaktors
- 40: Ausgang des Shiftreaktors
- 41: Eingang des Temperierungskanals des Shiftreaktors
- 42: Ausgang des Temperierungskanals des Shiftreaktors
- 43: Reformat-Leitung
- 44: Synthesegas-Leitung
- 45: erster Versorgungskanal
- 46: zweiter Versorgungskanal
- 47: Abgasleitung
- 48: zweite Abgasleitung
- 49: Wärmeisolierung
- 50: Gehäuse
- 51: Wärmeisolierung Gehäuse
- 52: Steuereinrichtung
- 53: Wasserpumpe
- 54: erstes Wasserventil
- 55: zweites Wasserventil
- 56: erste Wasserleitung
- 57: zweite Wasserleitung
- 59: Brennstoffhauptventil
- 60: Brennerventil
- 61: Reformerventil
- 62: erste Brennstoffleitung
- 63: zweite Brennstoffleitung
- 64: Dampfstrahlpumpe
- 65: Anodenrestgasleitung
- 67: Luftgebläse
- 68: Brenner-Luftventil
- 69: Kathoden-Luftventil
- 70: erste Luftleitung
- 71: Zweite Luftleitung
- 72: Dampfleitung
- 73: Dampf-Vordruckregler
- 74: Kondensatabscheider
- 75: Einstellventil
- 76: Überschussleitung
- 78: Wärmetauscher
- 79: zweiter Kondensatabscheider
- 80: Kondensatbehälter
- 81: Kondensatleitung

## Patentansprüche

1. Brennstoffzellensystem (10):
mit einem Stack (11), der einen Anodenkanal (12) und einen Kathodenkanal (13) aufweist,
mit einem während des Betriebs zur Kühlung dienenden Temperierungskanal (18), der mit dem Stack (11) thermisch verbunden ist,
mit einer Dampferzeugungsvorrichtung (29), und
mit einem Versorgungskanal (45), über den die Dampferzeugungsvorrichtung (29) während einer Stack-Aufheizphase mit dem Temperierungskanal (18) speisend verbunden ist.

2. Brennstoffzellensystem (10) nach Anspruch 1, **dadurch gekennzeichnet, dass** die Dampferzeugungsvorrichtung (29) einen Brenner (28) aufweist, der mit einem Reformierungsreaktor (27) heizend verbunden ist.

3. Brennstoffzellensystem (10) nach Anspruch 1 oder 2, mit einem Reformierungsreaktor (27) und einem Shift-reaktor (37), wobei auch der Shiftreaktor (37) mit einem Temperierungskanal (38) thermisch verbunden ist, mit einem Versorgungskanal (46), über den eine Dampferzeugungsvorrichtung (29) mit dem Temperierungskanal (38) speisend verbunden ist.

4. Brennstoffzellensystem (10) nach Anspruch 3, **dadurch gekennzeichnet, dass** die Temperierungskanäle (18, 38) des Stacks (11) und des Shiftreaktors (37) in Serie geschaltet sind.

5. Brennstoffzellensystem (10) nach einem der vorhergehenden Ansprüche, **dadurch gekennzeichnet, dass** der Temperierungskanal (18) des Stacks (11) sowohl gegen den Anodenkanal (12) als auch gegen den Kathodenkanal (13) fluiddicht ausgebildet ist.

6. Brennstoffzellensystem (10) nach einem der vorhergehenden Ansprüche, **dadurch gekennzeichnet, dass** dem Ausgang (20) des wenigstens einen Temperierungskanals (18) eine Druckhaltevorrichtung (73) nachgeschaltet ist.

7. Brennstoffzellensystem (10) nach einem der vorhergehenden Ansprüche, **dadurch gekennzeichnet, dass** dem wenigstens einen Temperierungskanal (18) ein Einstellventil (75) zur Einstellung einer Dampfstromaufteilung nachgeschaltet ist.

8. Brennstoffzellensystem (10) nach einem der vorhergehenden Ansprüche, **dadurch gekennzeichnet, dass** der Temperierungskanal (18) und die Dampferzeugungsvorrichtung (29) an einen Wasserzufuhrweg angeschlossen sind, der wenigstens ein Ventil (54, 55) zur Steuerung des Wasserzuflusses zu dem Temperierungskanal (18) und/oder der Dampferzeugungsvorrichtung (29) aufweist.

9. Verfahren zum Anfahren eines Brennstoffzellensystems (10) mit einem aufzuheizenden Stack (11), der mit einem Temperierungskanal (18) in thermischer Verbindung steht,
bei dem der während des Betriebs zur Kühlung dienende Temperierungskanal (18) beim Anfahren zum Aufheizen mit Dampf beaufschlagt wird.

10. Verfahren nach Anspruch 9, **dadurch gekennzeichnet, dass** über einen mit Dampf beaufschlagten Versorgungskanal (46) auch einem mit einem Shiftreaktor (37) in thermischer Verbindung stehenden Temperierungskanal (38) beim Anfahren Wärme zugeführt wird.

11. Verfahren nach einem der Ansprüche 9 bis 10, **dadurch gekennzeichnet, dass** der Dampf in wenigstens dem Temperierungskanal (18) zumindest teilweise kondensiert wird.

12. Verfahren nach einem der Ansprüche 9 bis 11, **dadurch gekennzeichnet, dass** mit einem Temperierungskanal (18) in thermischer Verbindung stehende Teile des Brennstoffzellensystems (10) durch den Dampf aufgeheizt und durch eine Druckhaltevorrichtung (73) der Druck in dem Temperierungskanal (18) reguliert wird, um die zu erreichende Betriebstemperatur zu regeln.

13. Verfahren nach einem der Ansprüche 9 bis 12, **dadurch gekennzeichnet, dass** ein aus dem Temperierungskanal (18) ausgeleiteter Dampfstrom aufgeteilt und ein erster Teilstrom einem Reformierungsreaktor (27) zugeleitet und ein zweiter Teilstrom abgeleitet wird.

14. Verfahren nach Anspruch 13, **dadurch gekennzeichnet, dass** der erste Teilstrom mittels einer geregelten oder ungeregelten Strahlpumpe (64) mit Brennstoff für einen Reformierungsreaktor (27) vermischt wird.

15. Verfahren nach einem der Ansprüche 9 bis 14, **dadurch gekennzeichnet, dass** die Massenströme von Wasser, Brennstoff und Luft mit einer Steuereinrichtung (52) nach einem Programm entsprechend dem Modus des Brennstoffzellensystems (10) eingestellt werden.

## Geänderte Patentansprüche

### Geänderte Patentansprüche gemäss Regel 137(2) EPÜ.

**1.** Brennstoffzellensystem (10):
mit einem Stack (11), der einen Anodenkanal (12) und einen Kathodenkanal (13) aufweist,
mit einem während des Betriebs zur Kühlung dienenden Temperierungskanal (18), der mit dem Stack (11) thermisch verbunden ist,
mit einem Reformierungsreaktor (27),
mit einer Dampferzeugungsvorrichtung (29), die einen Brenner (28) aufweist, der mit dem Reformierungsreaktor (27) heizend verbunden ist, und
mit einem Versorgungskanal (45), über den die Dampferzeugungsvorrichtung (29) während einer Stack-Aufheizphase mit dem Temperierungskanal (18) speisend verbunden ist.

**2.** Brennstoffzellensystem (10) nach Anspruch 1, mit einem Reformierungsreaktor (27) und einem Shiftreaktor (37), wobei auch der Shiftreaktor (37) mit einem Temperierungskanal (38) thermisch verbunden ist, mit einem Versorgungskanal (45), über den eine Dampferzeugungsvorrichtung (29) mit dem Temperierungskanal (38) speisend verbunden ist.

**3.** Brennstoffzellensystem (10) nach Anspruch 2, **dadurch gekennzeichnet, dass** die Temperierungskanäle (18, 38) des Stacks (11) und des Shiftreaktors (37) in Serie geschaltet sind.

**4.** Brennstoffzellensystem (10) nach einem der vorhergehenden Ansprüche, **dadurch gekennzeichnet, dass** der Temperierungskanal (18) des Stacks (11) sowohl gegen den Anodenkanal (12) als auch gegen den Kathodenkanal (13) fluiddicht ausgebildet ist.

**5.** Brennstoffzellensystem (10) nach einem der vorhergehenden Ansprüche, **dadurch gekennzeichnet, dass** dem Ausgang (20) des wenigstens einen Temperierungskanals (18) eine Druckhaltevorrichtung (73) nachgeschaltet ist.

**6.** Brennstoffzellensystem (10) nach einem der vorhergehenden Ansprüche, **dadurch gekennzeichnet, dass** dem wenigstens einen Temperierungskanal (18) ein Einstellventil (75) zur Einstellung einer Dampfstromaufteilung nachgeschaltet ist.

**7.** Brennstoffzellensystem (10) nach einem der vorhergehenden Ansprüche, **dadurch gekennzeichnet, dass** der Temperierungskanal (18) und die Dampferzeugungsvorrichtung (29) an einen Wasserzufuhrweg angeschlossen sind, der wenigstens ein Ventil (54, 55) zur Steuerung des Wasserzuflusses zu dem Temperierungskanal (18) und/oder der Dampferzeugungsvorrichtung (29) aufweist.

**8.** Verfahren zum Anfahren eines Brennstoffzellensystems (10) mit einem Reformierungsreaktor (27) und mit einem aufzuheizenden Stack (11), der mit einem Temperierungskanal (18) in thermischer Verbindung steht, bei dem der während des Betriebs zur Kühlung dienende Temperierungskanal (18) beim Anfahren zum Aufheizen mit Dampf beaufschlagt wird, wobei der Dampf mit einer Dampferzeugungsvorrichtung (29) mit einem Brenner (28) erzeugt wird, der auch den Reformierungsreaktor (27) des Brennstoffzellensystems (10) thermisch speist.

**9.** Verfahren nach Anspruch 8, **dadurch gekennzeichnet, dass** über einen mit Dampf beaufschlagten Versorgungskanal (45) auch einem mit einem Shiftreaktor (37) in thermischer Verbindung stehenden Temperierungskanal (38) beim Anfahren Wärme zugeführt wird.

**10.** Verfahren nach einem der Ansprüche 8 bis 9, **dadurch gekennzeichnet, dass** der Dampf in wenigstens dem Temperierungskanal (18) zumindest teilweise kondensiert wird.

**11.** Verfahren nach einem der Ansprüche 8 bis 10, **dadurch gekennzeichnet, dass** mit einem Temperierungskanal (18) in thermischer Verbindung stehende Teile des Brennstoffzellensystems (10) durch den Dampf aufgeheizt und durch eine Druckhaltevorrichtung (73) der Druck in dem Temperierungskanal (18) reguliert wird, um die zu erreichende Betriebstemperatur zu regeln.

**12.** Verfahren nach einem der Ansprüche 8 bis 11, **dadurch gekennzeichnet, dass** ein aus dem Temperierungskanal (18) ausgeleiteter Dampfstrom aufgeteilt und ein erster Teilstrom einem Reformierungsreaktor (27) zugeleitet und ein zweiter Teilstrom abgeleitet wird.

**13.** Verfahren nach Anspruch 12, **dadurch gekennzeichnet, dass** der erste Teilstrom mittels einer geregelten oder ungeregelten Strahlpumpe (64) mit Brennstoff für einen Reformierungsreaktor (27) vermischt wird.

**14.** Verfahren nach einem der Ansprüche 8 bis 13, **dadurch gekennzeichnet, dass** die Massenströme von Wasser, Brennstoff und Luft mit einer Steuereinrichtung (52) nach einem Programm entsprechend dem Modus des Brennstoffzellensystems (10) eingestellt werden.
